# EUROPÄISCHE PATENTSCHRIFT

(11) **EP 1 203 262 B1**
(45) Veröffentlichungstag und Bekanntmachung des Hinweises auf die Patenterteilung: **28.12.2005**
(21) Anmeldenummer: 00956390.9
(22) Anmeldetag: 03.08.2000
(51) Int. Cl.: G03B 21/60, G03H 1/30, G02B 5/32

(54) **HOLOGRAPHISCHE PROJEKTIONSVORRICHTUNG UND -VERFAHREN SOWIE BELICHTUNGSVORRICHTUNG UND -VERFAHREN**
HOLOGRAPHIC PROJECTION DEVICE AND METHOD, AND EXPOSURE DEVICE AND METHOD
DISPOSITIF ET PROCEDE DE PROJECTION HOLOGRAPHIQUE ET DISPOSITIF ET PROCEDE D'EXPOSITION

(30) Priorität: 03.08.1999 DE 19936383
(43) Veröffentlichungstag der Anmeldung: 08.05.2002
(73) Patentinhaber: Xetos AG, 82064 Strasslach (DE)
(72) Erfinder: KNOCKE, Frank, D-85560 Ebersberg (DE)
(74) Vertreter: Jacoby, Georg
(86) Internationale Anmeldenummer: PCT/EP2000/007544
(87) Internationale Veröffentlichungsnummer: WO 2001/009678

(56) Entgegenhaltungen:
- EP-A- 0 604 943
- DE-A- 2 508 889
- GB-A- 1 273 417
- GB-A- 1 332 352
- US-A- 3 627 916
- US-A- 3 823 412
- US-A- 4 065 202
- US-A- 4 834 476
- US-A- 5 745 288
- PATENT ABSTRACTS OF JAPAN vol. 011, no. 298 (P-620), 26. September 1987 (1987-09-26) -& JP 62 089941 A (YUUPU:KK), 24. April 1987 (1987-04-24)
- PATENT ABSTRACTS OF JAPAN vol. 018, no. 126 (P-1702), 2. März 1994 (1994-03-02) & JP 05 313118 A (KOUDO EIZOU GIJUTSU KENKYUSHO:KK), 26. November 1993 (1993-11-26)

## Beschreibung

Die vorliegende Erfindung betrifft eine Vorrichtung zum Projizieren von holographisch gespeicherter Information auf eine Projektionswand und ein entsprechendes Verfahren sowie eine Vorrichtung zum holographischen Belichten eines Mediums mit in einer ersten Richtung nebeneinander angeordneten Einzelprojektionen und ein entsprechendes Verfahren.

Für die Diaprojektion flächiger Bilder stehen eine Vielzahl unterschiedlicher Projektionswände zur Verfügung. Diese unterscheiden sich beispielsweise in ihren Richtcharakteristika. Ein erster Projektionswandtyp weist einen Belag auf, der ähnlich einem Katzenauge das auftreffende Licht in die ursprüngliche Richtung zurückschickt. Auf diesen Projektionswandtyp projizierte Dias können nur von Zuschauern betrachtet werden, die nahe der Projektionsachse sitzen. Ein weiterer Projektionswandtyp sind Leinwände, die keinerlei Richtwirkung zeigen. Das Licht des Diaprojektors wird in einen breiten Raumwinkel gestreut, was allerdings für helle Bilder einen entsprechend leistungsfähigen Projektor erfordert. Allen Zuschauern wird somit das gleiche, helle Bild geboten.

Bei dem bekannten Verfahren zur Hologrammbelichtung wird ein Objekt mit einem aufgeweiteten Laserstrahl beleuchtet. Die vom Objekt reflektierte Objektwelle fällt auf eine Photoplatte, die gleichzeitig mit einem ungestörten, am Objekt vorbei geführten Teil des ursprünglichen Laserstrahls, der Referenzwelle beleuchtet wird. Beide Wellen überlagern sich auf der Photoplatte, auf der nach dem Entwickeln die Bildinformation des Objekts in Form eines Hologramms gespeichert ist. Neben der Intensität enthält das Hologramm auch Information über die Phase der vom Objekt reflektierten Wellenfront.

Bei dem bekannten Verfahren für die Hologrammwiedergabe wird das Medium mit dem Hologramm mit dem ursprünglichen Referenzstrahl beleuchtet. Das Laserlicht wird am Muster des Hologramms gebeugt, so daß die Wellen bezüglich Phase und Intensität so weiter laufen, als kämen sie von dem aufgenommenen Objekt. Ein virtuelles Bild erscheint dort, wo sich bei der Aufnahme das Objekt befand. Ein reelles Bild entsteht, wenn das Hologramm mit der komplex-konjugierten Referenzwelle beleuchtet wird. Dies bedeutet, daß das nun verwendete Licht auf die ursprünglich verwendete Lichtquelle zuläuft und das Hologramm von der anderen Seite trifft. Der Betrachter des reellen Bildes sieht allerdings ein sogenanntes pseudoskopisches Bild. Wie bei einem Gipsabdruck sind Erhöhungen und Vertiefungen vertauscht.

Wird in das reelle Bild eine Mattscheibe als Projektionswand gestellt, geht die räumliche Information des Hologramms verloren und es ist lediglich ein verschwommenes, zweidimensionales Bild des Objektes sichtbar.

Aus der US-A-4 834 476, GB-A-1 273 417 und GB-A-1 332 352 sind jeweils Projektionsverfahren und -vorrichtungen bekannt, bei denen der Projektionsstrahl scharf auf das zu belichtende Medium abgebildet wird, welches sich damit vor der Projektionsebene befindet. Weitere Projektionsverfahren und -vorrichtungen sind aus der US-A-4 065 202, US-A-3 823 412, US-A-3 627 916, EP-A-0 604 943, DE 25 08 889 A, JP 62 089941 A, US-A-5 745 288 und JP 05 313118 A bekannt.

Der Erfindung liegt die Aufgabe zugrunde, ein kostengünstiges Projektionsverfahren für Hologramme und ein entsprechendes Belichtungsverfahren sowie entsprechende Vorrichtungen zu schaffen, mit denen es möglich ist, kostengünstig ein reelles Bild auf eine Fläche zu projizieren, das für einen Betrachter dreidimensional sichtbar wird.

Die Erfindung löst diese Aufgabe jeweils mit den Gegenständen der Ansprüche 1 und 22.

Nach Anspruch 1 ist eine Vorrichtung zum Projizieren von holographisch gespeicherten Einzelprojektionen auf eine Projektionswand geschaffen, mit einer Lichtquelle zum Erzeugen eines Lichtstrahls, einem Medium mit in einer ersten Richtung nebeneinander holographisch gespeicherten Einzelprojektionen, einer Projektionswand, die derart ausgestaltet ist, daß sie den auf die Projektionswand projizierten Lichtstrahl in der ersten Richtung erhält und in einer zweiten quer zur ersten Richtung verlaufenden Richtung streut, wobei Lichtquelle, Medium und Projektionswand so zueinander angeordnet sind, daß der Lichtstrahl der Lichtquelle auf das Medium geführt wird und der dort holographisch gebeugte Lichtstrahl auf die Projektionswand projiziert wird. Nach Anspruch 22 ist ein entsprechendes Verfahren geschaffen.

Vorteilhaft kann die projizierte Information wie bei einem Hologramm von mehreren Personen ohne optische oder technische Hilfsmittel wie Brillen oder Head-Tracker von verschiedenen Positionen aus dreidimensional betrachtet werden. Das Objekt kann sich dabei sowohl vor als auch hinter der Projektionswand befinden.

Bevorzugt sind in dem Medium eine Vielzahl an Einzelprojektionen holographisch nebeneinander gespeichert. Daher sehen alle, selbst bei seitlicher Kopfbewegung auf die Projektionswand blickenden Zuschauer die jeweilige richtige perspektivische Ansicht z.B. eines Objektes. Der räumliche Eindruck der Objektdarstellung entsteht dabei aufgrund der beiden unterschiedlichen Betrachtungswinkel vom linken und vom rechten Auge. Ebenso besitzt das Medium bevorzugt eine ausreichende Breite von mindestens der Projektionswandbreite, damit auch unter einem großen Betrachtungswinkel das Objekt noch sichtbar ist.

Vorteilhaft bildet die Projektionsvorrichtung mit der Projektionswand einen festen Aufbau der genauso einfach wie ein Diaprojektor zu bedienen ist. Anstelle von Dias werden z.B. lediglich Filmstreifen als Medium ausgewechselt. Das Medium ist in der Regel ein länglicher Filmstreifen, auf dem in Längsrichtung die Einzelprojektionen nebeneinander holographisch gespeichert sind. Die Längsrichtung des Filmstreifens legt in diesem Fall auch die erste Richtung fest.

Die Projektionswand ist erfindungsgemäß so ausgestaltet, daß der auf sie projizierte Lichtstrahl in der ersten Richtung ungehindert durch die Projektionswand gelangt oder aber reflektiert wird, während er in Querrichtung z.B. entsprechend einer Mattscheibe oder Leinwand gestreut wird. Die beiden Richtungen sind hierbei funktionsmäßig definiert. Entscheidend bei der Zuordnung der ersten Richtungen von Medium und Projektionswand ist, daß die auf dem Medium in einer Richtung nebeneinander liegenden Einzelprojektionen von der Projektionswand entsprechend ihren unterschiedlichen Projektionswinkeln auf die Projektionswand durchgelassen werden, so daß die Bildspalten der Einzelprojektionen lediglich unter einem bestimmten Betrachtungswinkel betrachtet werden können. In einem die Projektionswand und das Medium umfassenden Bezugskoordinatensystem können die erste Richtung des Mediums und die erste Richtung der Projektionswand dabei unter einem bestimmten Winkel zueinander stehen, falls nämlich eine in den Projektionsstrahl zwischengeschaltete Optik oder.optische Ablenkeinheit den Projektionsstrahl vor Auftreffen auf die Projektionswand in seiner Richtung dreht.

Bevorzugt ist die Projektionswand so bezüglich eines Betrachters ausgerichtet, daß die erste Richtung horizontal und die zweite Richtung vertikal verläuft. Mit dieser Ausrichtung der Projektionswand ist es vorteilhaft möglich, dem sitzenden oder stehenden Betrachter eine perspektivische Ansicht in Horizontalrichtung zu verschaffen. In Vertikalrichtung ist eine solche perspektivische Ansicht in der Regel nicht erforderlich, da sich die Augenhöhe des ruhenden Betrachters nicht verändert. Unabhängig von der Sitzhöhe streut die Projektionswand nunmehr alle auftreffenden Projektionsstrahlen in Vertikalrichtung und somit in das Auge des Betrachters. Somit wird ein größtmöglicher Kontrast bzw. Bildhelligkeit geschaffen.

Bevorzugt ist die Projektionswand so ausgestaltet, daß die Betrachtungsseite dem auf die Projektionswand projizierten Lichtstrahl gegenüber liegt, wobei die Projektionswand in der ersten Richtung transparent ist. Vorteilhaft kann hiermit die gesamte Projektionsoptik auf der Rückseite der Projektionswand angeordnet sein, so daß im Betrachtungsraum keine störenden optischen Geräte oder Lichtstrahlen vorhanden sind. Der Betrachter schaut wie beim Fernsehbildschirm auf die Projektionswand.

Bevorzugt ist die Lichtquelle so ausgestaltet, daß ihr Lichtstrahl alle Einzelprojektionen des Mediums gleichzeitig trifft. Die auf beispielsweise einem länglichen Filmstreifen holographisch gespeicherten Einzelprojektionen werden somit von einem fächerförmigen Lichtstrahl gleichzeitig auf die Projektionswand projiziert, so daß ein ruhiges stehendes Projektionsbild sichtbar wird.

Alternativ kann die Lichtquelle so ausgestaltet sein, daß ihr Lichtstrahl die holographisch gespeicherten Einzelprojektionen des Mediums oder Gruppen davon einzeln abtastet. Hierzu kann die Lichtquelle bevorzugt einen rotierenden Polygonspiegel zum Abtasten der Einzelprojektionen oder Gruppen davon umfassen. Beim Abtasten des Mediums fällt der Lichtstrahl abhängig von dem abgetasteten Hologrammelement (eine oder mehrere Einzelprojektion, abhängig von der beliebig wählbaren Breite des Abtaststrahls) unter einem bestimmten Winkel auf das Medium und wird von dort unter einem bestimmten Winkel zur Projektionswand weitergeleitet.

Bevorzugt ist die Lichtquelle einer Laserlichtquelle. Damit wird vorteilhaft der für große Projektionsflächen erforderliche Kontrast und die erforderliche Bildhelligkeit geliefert. Außerdem werden vorteilhaft chromatische und räumliche Abbildungsfehler minimiert, da mit dem Laserlicht die Rekonstruktionsparameter des Hologramms exakt eingehalten werden.

Bevorzugt sind die Einzelprojektionen in dem Medium in Form eines Volumenhologramms gespeichert und Lichtquelle, Medium und Leinwand sind so angeordnet, daß die volumenholographisch gespeicherten Einzelprojektionen in Transmission ausgelesen werden. Der Vorteil bei der Rekonstruktion von Volumenhologrammen in Transmission liegt in der hohen Beugungseffizienz.

Dabei sind insbesondere zum Projizieren farbiger Darstellungen bevorzugt drei Medien mit den holographisch gespeicherten Einzelprojektionen für jeweils eine vorbestimmte Wellenlänge und drei jeweils den drei Medien zugeordnete Lichtquellen mit einer jeweils vorbestimmten Lichtwellenlänge vorgesehen, die so zueinander angeordnet sind, daß ihre von dem jeweiligen zugeordneten Medium gebeugten Lichtstrahlen übereinander auf die Projektionswand projiziert werden.

Alternativ sind die Einzelprojektionen in dem Medium in Form eines Reflexionshologramms gespeichert und Lichtquelle, Medium und Leinwand sind so angeordnet, daß die holographisch gespeicherten Einzelprojektionen in Reflexion ausgelesen werden. Dabei sind bevorzugt die Einzelprojektionen mit drei vorbestimmten Wellenlängen aufgezeichnet, und die Lichtquelle emittiert entweder Weißlicht oder Licht in den drei vorbestimmten Lichtwellenlängen. Vorteilhaft wird zum Wiedergeben einer farbigen Darstellung lediglich ein Reflexionshologramm benötigt, das gleichzeitig die Information in allen drei Farben enthält. Außerdem wird beim Auslesen mit Weißlicht lediglich eine Lichtquelle benötigt, so daß insgesamt der Apparateaufwand für die gesamte Projektionsvorrichtung reduziert wird. Beim Auslesen mit einer Weißlichtquelle wird das Hologramm beispielsweise in den drei Grundfarben (mit denen es aufgezeichnet wurde) unter drei Auslesewinkeln erzeugt, die wiederum übereinander auf die Projektionswand projiziert werden können.

Bevorzugt umfaßt die Projektionswand zum Erzielen ihrer richtungsabhängigen Streueigenschaft eine Lentikular-Linsenanordnung. Hierbei kann es sich z.B. um in Horizontalrichtung verlaufende zylinderförmige Rillen in der Projektionswand handeln. Eine solche Projektionswand ist bereits kostengünstig im Handel verfügbar.

Alternativ umfaßt die Projektionswand zum Erzielen ihrer richtungsabhängigen Streueigenschaft ein entsprechend ausgebildetes holographisches Gitter. Vorteilhaft kann hiermit die Effizienz der Projektionswand durch ein geeignet ausgebildetes holographisches Gitter optimiert werden.

Bevorzugt hat die Projektionswand eine Zylinderform und Lichtquelle sowie Medium sind so ausgestaltet und zueinander angeordnet, daß der gebeugte Lichtstrahl im wesentlichen auf die gesamte Zylinderoberfläche der Projektionswand projiziert wird. Vorteilhaft kann somit eine Rundumansicht des darzustellenden Objektes wiedergegeben werden.

Bevorzugt umfaßt die Lichtquelle einen Kegelspiegel oder einen Drehspiegel, der im wesentlichen auf der Achse der zylinderförmigen Projektionswand so angeordnet ist, daß der von dem Kegelspiegel reflektierte Lichtstrahl auf die Projektionswand projiziert wird. Bei dieser Anordnung ist vorteilhaft der bauliche Aufwand weitestgehend reduziert.

Bevorzugt ist das Medium ringförmig ausgestaltet und so bezüglich des Kegel- bzw. Drehspiegels angeordnet, daß der von dem Kegel- bzw. Drehspiegel reflektierte Lichtstrahl zum Auslesen auf das Medium geführt wird. Dabei kann der Kegelspiegel bzw. der Drehspiegel sowie das ringförmige Medium innerhalb der zylinderförmigen Projektionswand angeordnet sein und diese somit von innen mit dem Projektionslicht beleuchten. Somit sind vorteilhaft beispielsweise Litfaßsäulen verfügbar, die des darzustellende Objekt perspektivisch wiedergeben und in deren Inneren die gesamte Projektionsoptik verborgen ist.

Alternativ ist ein Ringspiegel vorgesehen und so angeordnet, daß der von dem Kegel- bzw. Drehspiegel reflektierte Lichtstrahl von dem Ringspiegel von außen auf die Zylinderoberfläche der Projektionswand reflektiert wird. Bei einer entsprechend reflektierenden Projektionswand treten keine durchgangsbedingten Intensitätsverluste des Projektionsstrahles auf, im Gegensatz zu einer durchscheinenden Projektionswand. Zudem erreicht diese Anordnung einen größeren horizontalen Betrachtungswinkel für die Objektpunkte nahe oder außerhalb der Zylinderoberfläche.

Bevorzugt ist die Projektionswand in einen Tisch integriert,
wobei die lichtführenden Bauteile unterhalb der Tischebene angeordnet sind. Die gesamte Vorrichtung kann somit vorteilhaft in einen runden Konferenztisch integriert sein.

Zum Vorführen von flüssigen dreidimensionalen Hologramm-Darbietungen ist ein Magazin mit mehreren Medien vorgesehen, daß ein automatisches Wechseln der Medien gestattet.

Bevorzugt ist die Vorrichtung nach Art eines Diaprojektors mit Überblendfunktion ausgestaltet.

Zum holographischen Belichten eines Mediums mit in einer ersten Richtung nebeneinander angeordneten Einzelprojektionen wird die Information der Einzelprojektionen auf eine imaginäre Projektionswand projiziert, das Medium für die Belichtung in den projizierten informationstragenden Objektlichtstrahl gebracht, ein Referenzlichtstrahl auf das Medium geführt, und in dem Medium jede Einzelprojektion einzeln nebeneinander durch eine schrittweise Relativbewegung von Objektlichtstrahl und Medium zueinander entlang der ersten Richtung belichtet.

Der Referenzlichtstrahl kann dabei zum Einhalten der Kohärenzbedingung mittels bekannter Verfahren aus einer Lichtquelle abgezweigt werden, die auch zum Erzeugen des Objektlichtstrahls verwendet wird.

Der Objektlichtstrahl wird dabei durch ein geeignetes optisches Medium (z.B. Dia, LCD-Anzeige) mit der jeweiligen zu der Projektion gehörenden Information belichtet.

Die imaginäre Projektionswand dient lediglich der Justierung des Projektionsstrahls und kann auch weggelassen werden, wie bereits durch die Formulierung "imaginär" angedeutet ist. Wichtig hierbei ist lediglich, daß der Projektionsstrahl so eingestellt wird, daß er die entsprechende Information auf eine in den Projektionsstrahl an die richtige Position gestellte Projektionswand scharf abbilden würde.

Das Medium wird nunmehr je nach seiner Größe an eine bestimmte Stelle in den Projektionsstrahl gebracht. Nahe der Projektionsoptik ist der Projektionsstrahl noch nicht so weit aufgeweitet, so daß ein lediglich schmaler Filmstreifen als Medium für die Belichtung größenmäßig ausreicht. Die Relativbewegung zwischen Objektlichtstrahl und Medium kann durch Festhalten eines dieser beiden und durch Bewegen des anderen oder aber auch durch Bewegen beider erfolgen.

Der Objektlichtstrahl wird von einer Flüssigkristallanzeige erzeugt, auf der die zu belichtende Information einzeln angezeigt wird. Vorteilhaft kann aus den verschiedenen perspektivischen Ansichten eines Objektes von einem Computer die benötigte Information durch einen entsprechenden Algorithmus in Echtzeit berechnet und auf der Flüssikristallanzeige angezeigt werden. Somit ist ohne die reelle Existenz die räumlich-plastische Darstellung eines lediglich als Computergrafik vorliegenden Objektes möglich. Der verwendete Algorithmus sorgt dafür, daß das Objekt später dreidimensional richtig und nicht pseudoskopisch oder verzerrt abgebildet wird.

Für die Herstellung eines Mediums zum Verwenden in einer Projektionsvorrichtung mit durchscheinender Projektionswand wird das von der Flüssigkristallanzeige angezeigte Bild pseudoskopisch angezeigt. Vorteilhaft wird hiermit eine nichtinvertierte Darstellung des Objektes geschaffen. Bei der Berechnung des Bildes durch einen Computer wird hierzu eine komplex konjugierte Darstellung ermittelt.

Die Erfindung sowie weitere Vorteile und Merkmale der Erfindung werden nunmehr anhand bevorzugter Ausführungsbeispiele mit Bezug auf die beigefügte Zeichnung näher erläutert. In der Zeichnung zeigen:
- Fig. 1: ein schematisches Diagramm einer erfindungsgemäßen Vorrichtung zum holografischen Belichten eines Mediums mit in einer ersten Richtung nebeneinander angeordneten Einzelprojektionen;
- Fig. 2: ein schematisches Diagramm einer Vorrichtung zum Projizieren von holographisch gespeicherten Einzelprojektionen auf eine Projektionswand;
- Fig. 3: ein spezielles Ausführungsbeispiel der in Fig. 2 gezeigten Projektionsvorrichtung; und
- Fig. 4: eine Schnittansicht zum Erläutern der Projektionen der Einzelprojektionen auf die Projektionswand und zum Erläutern der Belichtung von Einzelprojektionen in dem Medium.

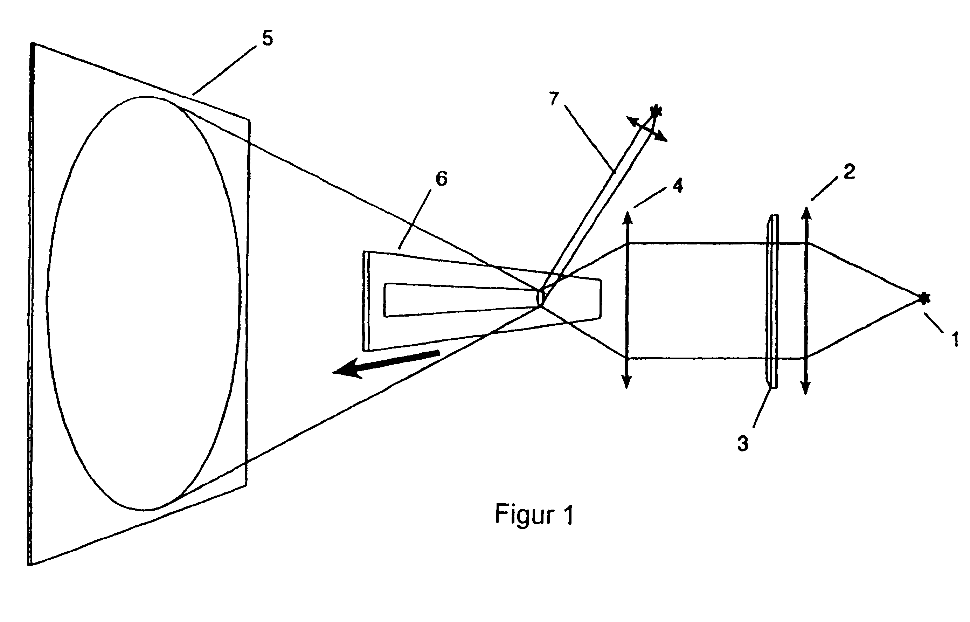

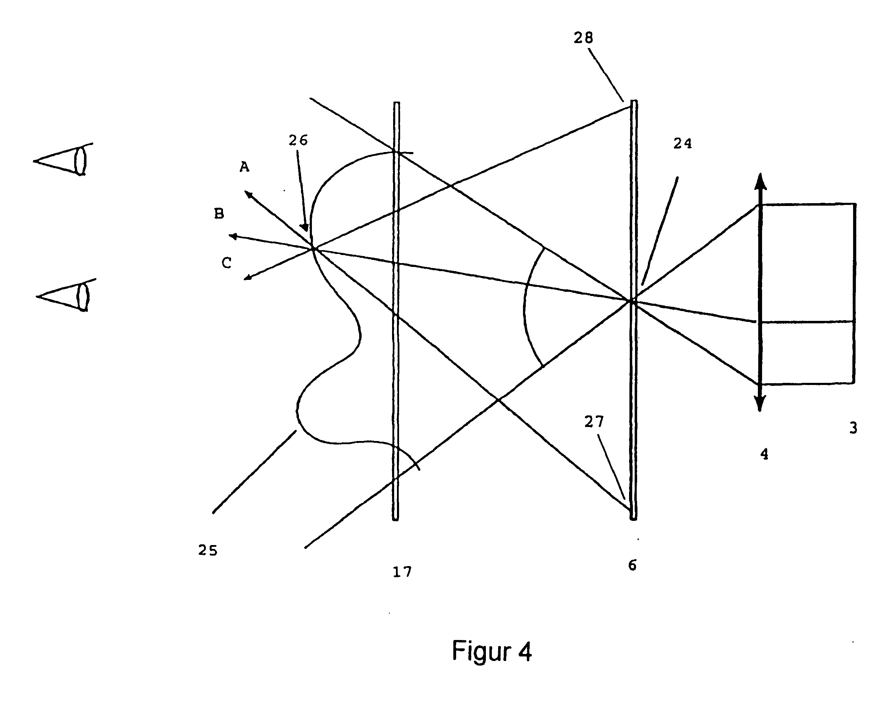

In Fig. 1 ist ein schematisches Diagramm einer erfindungsgemäßen Vorrichtung zum holografischen Belichten eines Mediums mit in einer ersten Richtung nebeneinander angeordneten Einzelprojektionen gezeigt. Der Lichtstrahl einer Lichtquelle 1 wird mittels eines Objektivs 2 in einen parallelen Lichtstrahl umgewandelt, der auf eine Flüssigkristallanzeige 3 fällt. Die Flüssigkristallanzeige 3 kann mit einem nicht dargestellten Computer verbunden sein, der entsprechende Steuerungsdaten zum Darstellen von Bildern auf der Flüssigkristallanzeige 3 liefert. Der durch die Flüssigkristallanzeige 3 hindurchtretende Objektlichtstrahl gelangt zu einer Projektionsoptik 4, von der er auf eine imaginäre Projektionswand 5 projiziert wird. Die Projektionsoptik 4 ist so ausgestaltet und angeordnet, daß das Bild des von der Flüssigkristallanzeige 3 dargestellten Objektes scharf auf der Projektionswand 5 erscheint. Im Brennpunkt der Projektionsoptik 4 ist ein zu belichtender Filmstreifen 6 angeordnet. Der Filmstreifen 6 kann alternativ auch lediglich dicht an die Projektionsoptik 4 heran geführt werden, so daß lediglich ein kleiner Ausschnitt von dem Objektlichtstrahl beleuchtet wird, und somit ein schmaler Filmstreifen ausreicht. In der unten stehenden Beschreibung zur Figur 4 werden die Einzelprojektionen auf dem Medium noch einmal näher erläutert.

Ferner wird auf den zu belichtenden Ausschnitt des Lichtstreifens, auf den der Objektlichtstrahl fällt, ein Referenzlichtstrahl geleuchtet, der aus Kohärenzgründen von der Lichtquelle 1 abgezweigt ist.

Der Filmstreifen und die gesamte Anordnung 1 bis 4 sind so in einer ersten Richtung zueinander schrittweise beweglich angeordnet, daß der Filmstreifen 6 in mehreren auf dem Filmstreifen 6 nebeneinander liegenden Einzelprojektionen belichtet werden kann. Hierzu kann beispielsweise der Filmstreifen 6 gegenüber einer im Raum fixierten Anordnung 1 bis 4 bewegt werden. Alternativ kann auch ein nicht dargestellter Spiegel hinter der Projektionsoptik 4 vorgesehen werden, der den Projektionslichtstrahl entsprechend auf die einzelnen Ausschnitte des Filmstreifens 6 ablenkt. Nach Belichten einer Einzelprojektion wird also der Filmstreifen 6 oder der Objektlichtstrahl so entlang der ersten Richtung bewegt, daß die als nächstes zu belichtende Einzelprojektion dicht an dem Ausschnitt der belichteten vorhergehenden Einzelprojektion liegt, oder sich mit dieser überlappt.

Der Filmstreifen 6 kann beispielsweise 1 m lang und 5 cm hoch sein. Ein Ausschnitt für eine Einzelprojektion kann dabei ein Höhe von nahezu 5 cm und eine Breite von 8 mm aufweisen. Somit können auf dem gesamten Filmstreifen 6 von 1 m Länge bis zu 130 Positionen bzw. Einzelprojektionen gespeichert werden.

Die Lichtquelle 1 kann eine monochromatische Laserlichtquelle sein, deren Lichtwellenlänge auf beispielsweise eine von drei Wellenlängen zum Erzeugen einer farbigen Darstellung des Objektes abgestimmt ist. Bei der Verwendung eines Farbstofflasers können auch entsprechende Farbfilter zum Ausblenden der gewünschten Lichtwellenlänge in den Lichtstrahlengang des Lasers gebracht werden.

Die Einzelprojektionen können dabei in Form eines Volumen-oder eines Reflexionshologramms in den Filmstreifen 6 belichtet werden. Im ersten Fall fallen hierfür Objektlichtstrahl und Referenzlichtstrahl von gegenüberliegenden Seiten auf den Filmstreifen 6, im zweiten Fall von der gleichen Seite. Falls die Einzelprojektionen in Form eines farbigen Reflexionshologramms in dem Filmstreifen 6 aufgezeichnet werden, kann der durch die anschließende Entwicklung des Filmstreifens 6 auftretende Schrumpf- oder Quellprozeß und die damit einhergehende Wellenlängenänderung dadurch kompensiert werden, daß von dem Computer der Maßstab des auf der Flüssigkristallanzeige 3 dargestellten Objektes entsprechend angepaßt wird.

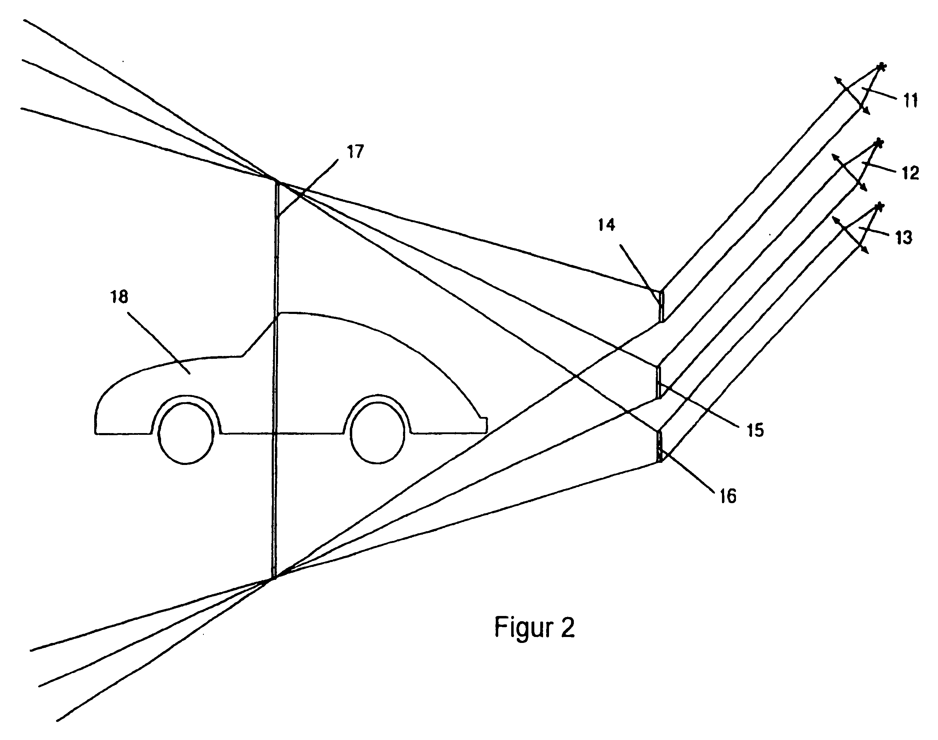

Fig. 2 zeigt ein schematisches Diagramm einer erfindungsgemäßen Vorrichtung zum Projizieren von holographisch gespeicherten Einzelprojektionen auf eine Projektionswand. Die Vorrichtung umfaßt drei Lichtquellen 11, 12 und 13, die jeweils einen Lichtstrahl mit einer bestimmten Lichtwellenlänge erzeugen. Der jeweilige Lichtstrahl wird unter einem Winkel auf jeweils einen zugeordneten Filmstreifen 14 bis 16 geführt, der beispielsweise mittels einer oben beschriebenen Vorrichtung belichtet worden ist. Die drei jeweils von dem Volumenhologramm des jeweiligen Filmstreifens 14 bis 16 gebeugten Lichtstrahlen werden gleichzeitig und übereinander auf eine Projektionswand 17 projiziert. Jeder Filmstreifen 14 bis 16 enthält das in einer bestimmten Farbe aufgezeichnete Einzelprojektion, so daß bei entsprechender Farbwahl der drei Lichtwellenlängen das darzustellende Objekt auf der Projektionswand farbig wiedergegeben wird.

Die Filmstreifen 14 bis 16 sind dabei schmale Filmstreifen, deren Länge zum Erzielen einer hohen perspektivischen Auflösung (d.h., ohne "Ruckeleffekt" bei horizontaler Augenbewegung) sich im wesentlichen über die gesamte Breite der Projektionsleinwand 17 erstrecken können. Da die Einzelprojektionen auf den Filmstreifen 14 bis 16 in kleinen dicht nebeneinander liegenden Ausschnitten gespeichert sind, werden sie alle abhängig von ihrer horizontalen Lage unter einem unterschiedlichen Winkel auf die Projektionswand 17 projiziert.

Die Projektionswand 17 ist dabei so beschaffen, daß sie das Licht nur vertikal streut und die horizontale Projektionsrichtung erhält. Somit bleibt die winkelabhängige Trennung der Einzelprojektionen erhalten und der Betrachter sieht abhängig von seiner Position (d.h. seinem Betrachtungswinkel) immer die richtige räumliche Ansicht eines beispielsweise perspektivisch von dem Filmstreifen 14 bis 16 farbig dargestellten Objektes. Alternativ können auch beliebige Daten nebeneinander in den einzelnen Ausschnitten der Filmstreifen 14 bis 16 gespeichert sein, so daß abhängig vom Betrachtungswinkel der Projektionswand 17 die verschiedenen Daten bzw. Informationen sichtbar werden.

Die vertikale Streueigenschaft der Projektionswand 17 ermöglicht, daß der Betrachter bei vorgegebener Augenhöhe alle Pixel der Einzelprojektion in Vertikalrichtung sehen kann (so werden z.B. der Projektionslichtstrahl des obersten wie auch des untersten Randpixels einer Einzelprojektion in sein Auge gestreut). Hierzu weist die Projektionswand 17 beispielsweise eine Lentikular-Linsenanordnung auf, bei der viele kleine Zylinderlinsen (kreisförmige Rillen) in horizontaler Richtung auf der Oberfläche der Projektionswand 17 vorgesehen sind. Alternativ kann ein entsprechendes holographisches Gitter in die ansonsten transparenten Projektionswand 17 belichtet sein, daß die gewünschte vertikale Streueigenschaft erzeugt. Als weitere Alternative kann die Projektionswand 17 auch als Fresnel-Objekt augebildet sein.

Die Projektionswand 17 kann ferner so beschaffen sein, daß das projizierte Bild auf ihrer Vorder- oder ihrer Rückseite sichtbar wird. Die Vorderseite kennzeichnet hierbei diejenige Seite der Projektionswand 17, die der Projektionsanordnung 11 bis 16 gegenüberliegt.

Im Falle einer vorderseitigen Betrachtung des Projektionsbildes ist die Projektionswand 17 im wesentlichen transparent, wobei die Streueigenschaft in Vertikalrichtung weiterhin vorgesehen ist.

Alternativ ist für die rückwärtige Betrachtung des Bildes die Projektionswand 17 auf der Rückseite verspiegelt, wobei weiterhin die vertikale Streueigenschaft vorgesehen ist.

Die Lichtquellen 11 bis 13 sind bezüglich der Filmstreifen 14 bis 16 und der Projektionswand 17 derart angeordnet, daß der Rekonstruktionsstrahl bzw. der Objektlichtstrahl nullter Ordnung nicht, sondern lediglich der "gebeugte" Objektlichtstrahl erster Ordnung auf die Projektionswand 17 fällt (Offaxis-Hologramm).

Die Lichtstrahlen der Lichtquellen 11 bis 13 sind gemäß einem ersten Ausführungsbeispiels der Erfindung so aufgefächert, daß sie auf die Filmstreifen 14 bis 16 über deren gesamte Länge auftreffen. Somit werden alle in den Filmstreifen 14 bis 16 gespeicherten Einzelprojektionen gleichzeitig ausgelesen und auf die Projektionswand 17 projiziert. Durch den horizontalen Versatz der Einzelprojektionen auf den Filmstreifen 14 bis 16 und das Beleuchten der Filmstreifen mit jeweils einer im wesentlichen punktförmigen Lichtquelle 11 bis 13 erscheinen die Spalten der Einzelprojektionen auf der Projektionswand 17 lediglich unter einem bestimmten Betrachtungswinkel. Für die farbige Darstellung des Objektes werden die Objektlichtstrahlen der Filmstreifen 14 bis 16 übereinander auf die Projektionswand 17 projiziert, wobei Rechnung getragen werden muß, daß alle drei entsprechenden Einzelprojektionen der drei Grundfarben unter dem selben Betrachtungswinkel auf die Projektionswand 17 projiziert wird.

Alternativ können die Einzelprojektionen der Filmstreifen 14 bis 16 auch einzeln oder in Gruppen von den jeweiligen Lichtstrahlen der Lichtquellen 11 bis 13 abgetastet werden. Hierzu können bevorzugt geeignete rotierende Polygonspiegel oder ähnliches verwendet werden.

Gemäß einem nicht dargestellten Ausführungsbeispiel werden die Filmstreifen 14 bis 16 in Reflexion ausgelesen. Hierzu sind die Einzelprojektionen in Form von Reflexionshologrammen (Flächenhologrammen) auf den Filmstreifen 14 bis 16 gespeichert. Dabei kann anstelle von drei Filmstreifen 14 bis 16 lediglich ein Filmstreifen verwendet werden, indem jede Einzelprojektion mit den drei Grundfarben belichtet ist. Die Einzelprojektion erscheint beim Bestrahlen des Reflexionshologrammes mit einer einzigen Weißlichtquelle lediglich unter einem bestimmten Reflexionswinkel in der entsprechenden Grundfarbe. Durch eine geeignete nicht dargestellte Optik können alle drei den drei Grundfarben entsprechenden Einzelprojektionen gleichzeitig und übereinander auf die Projektionswand 17 projiziert werden. Als Lichtquelle kann in diesem Fall auch ein Quecksilberdampflampe eingesetzt werden (die bevorzugt ein scharfes Spektrum erzeugt, oder der gute Farbfilter nachgeschalten sind).

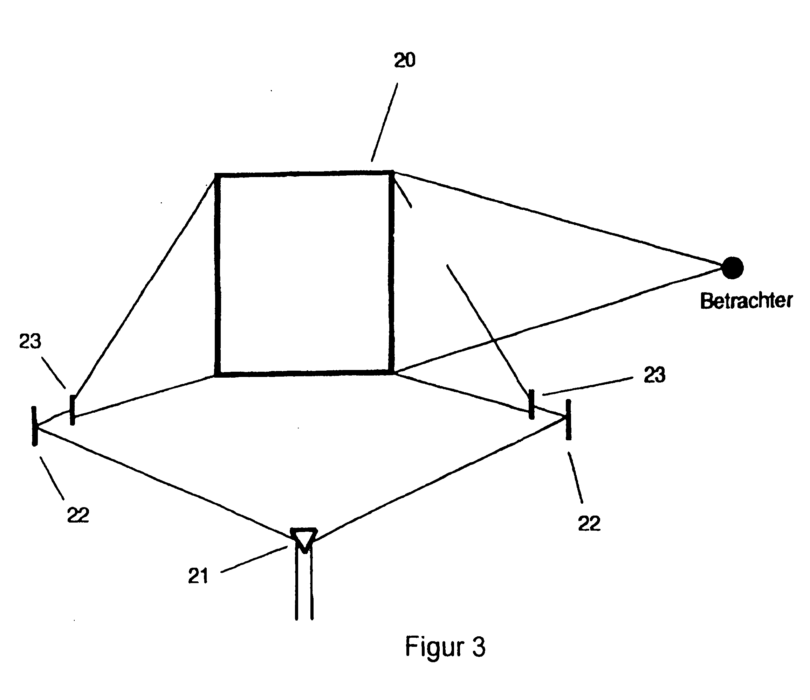

Fig. 3 zeigt eine Schnittansicht eines bevorzugten Ausführungsbeispiels der in Fig. 2 gezeigten erfindungsgemäßen Projektionsvorrichtung. Die in Fig. 3 gezeigte Projektionsvorrichtung weist eine zylinderförmige Projektionswand 20 auf, die beispielsweise auf einem Konferenztisch angeordnet sein kann. Damit das Projektionsbild auf der gesamten Außenfläche der zylinderförmigen Projektionswand 20 sichtbar wird, wird gemäß einer ersten Alternative dieses bevorzugten Ausführungsbeispiels ein entlang der Zylinderachse der Projektionswand 20 nach oben eingestrahlter Laserstrahl von einem Kegelspiegel 21 in einen Kegelstrahl reflektiert. Der Kegelstrahl trifft auf die Innenseite eines innen verspiegelten ringförmigen Spiegels 22, der das Licht auf einen ebenfalls ringförmigen Filmstreifen 23 reflektiert. Hierbei sind der Kegelspiegel 21, der ringförmige Spiegel 22 und der ringförmige Filmstreifen 23 so zueinander angeordnet, daß der vom Filmstreifen 23 Objektlichtstrahl nullter Ordnung nicht auf die zylinderförmige Projektionswand 20 projiziert wird, sondern lediglich der gebeugte Objektlichtstrahl erster Ordnung.

Die Lichtquelle zum Erzeugen des Laserstrahls, der Kegelspiegel 21, der ringförmige Spiegel 22 und der ringförmige Filmstreifen 23 können so in einem Konferenztisch in dessen Inneren integriert sein, daß lediglich der gebeugte Objektlichtstrahl erster Ordnung aus der Tischoberfläche nach oben austritt und auf die Projektionswand 20 fällt. Alternativ zu dem Kegelspiegel 21 kann auch ein rotierender Polygonspiegel eingesetzt werden, der den Filmstreifen 23 mit einem auf dessen Innenfläche umlaufenden Lichtstrahl abtastet. Auf dem Filmstreifen 23 sind wiederum die Einzelprojektionen in Umlaufrichtung des Filmstreifens 23 nebeneinander angeordnet.

Insgesamt sind die Projektionsvorrichtungen grundsätzlich genauso einfach zu bedienen wie ein Diaprojektor. Anstelle von Dias werden lediglich Filmstreifen mit den belichteten Hologrammen ausgewechselt. Das Wechseln der Filmstreifen kann auch durch ein automatisches Magazin erfolgen. Außerdem können das Magazin und die Lichtquelle so von einer nicht dargestellten Steuerungseinheit gesteuert werden, daß Überblendtechniken vorgeführt werden können.

Figur 4 zeigt eine Schnittansicht zum Erläutern der Projektionen der Einzelprojektionen auf die Projektionswand 17 sowie zum Erläutern der Belichtung des Mediums 6 mit Einzelprojektionen bzw. -belichtungen. Jede in das Medium 6 belichtete Einzelbelichtung 24 projiziert ein vom Computer berechnetes Bild auf die Projektionswand 17. Die Farbwerte bzw. Graustufenwerte der Pixel dieses vom Computer berechneten Bildes sind dabei abhängig von den zugehörigen Objektpunkten. Die zugehörigen Objektpunkte wiederum können vom Computer anhand des Schnittpunktes der Objektoberfläche mit dem zu jedem Pixel gehörenden Lichtstrahl ermittelt werden.

In Figur 4 ist ein für den Betrachter sichtbares Objekt 25 eingezeichnet. Ein Objektpunkt 26 des Objektes 25 wird dabei abhängig von dem Betrachtungswinkel von verschiedenen Einzelbelichtungen des Mediums projiziert. So stammt die Projektion des jeweils unter einem bestimmten Winkel A, B und C auf die Projektionswand 17 blickenden Betrachters von einer jeweiligen Einzelbelichtung 27, 24 und 28 an einem ersten äußersten Ende, in der Mitte und an dem zweiten äußersten Ende des Mediums 6.

## Patentansprüche

1. Vorrichtung zum Projizieren von holografisch gespeicherten Einzelprojektionen auf eine Projektionswand (17; 20), mit:
a) einer Lichtquelle (11-13) zum Erzeugen eines Lichtstrahls;
b) einem Medium (6; 14-16; 23) mit in einer ersten Richtung nebeneinander holografisch gespeicherten Einzelprojektionen; und
c) einer Projektionswand (17; 20);
d) wobei Lichtquelle (11-13), Medium (6; 14-16; 23) und Projektionswand (17; 20) so zueinander angeordnet sind, daß der Lichtstrahl der Lichtquelle (11-13) auf das Medium (6; 14-16; 23) fällt und der dort holografisch gebeugte Lichtstrahl auf die Projektionswand (17; 20) projiziert wird;
**dadurch gekennzeichnet, daß**
e) die Projektionswand (17; 20) derart ausgestaltet ist, daß sie den auf die Projektionswand (17; 20) projizierten Lichtstrahl in der ersten Richtung erhält und in einer zweiten quer zur ersten Richtung verlaufenden Richtung streut.

2. Vorrichtung nach Anspruch 1, bei welcher die Projektionswand (17; 20) so bezüglich eines Betrachters ausgerichtet ist, daß die erste Richtung horizontal und die zweite Richtung vertikal verläuft.

3. Vorrichtung nach Anspruch 1 oder 2, bei welcher die Projektionswand (17; 20) so ausgestaltet ist, daß die Betrachtungsseite dem auf die Projektionswand (17; 20) projizierten Lichtstrahl gegenüberliegt, wobei die Projektionswand (17; 20) in der ersten Richtung transparent ist.

4. Vorrichtung nach einem der vorhergehenden Ansprüche, bei welcher die Lichtquelle (11-13) so ausgestaltet ist, daß ihr Lichtstrahl alle Einzelprojektionen des Mediums (6; 14-16; 23) gleichzeitig trifft.

5. Vorrichtung nach einem der Ansprüche 1 bis 3, bei welcher die Lichtquelle (11-13) so ausgestaltet ist, daß ihr Lichtstrahl die holografisch gespeicherten Einzelprojektionen des Mediums (6; 14-16; 23) oder Gruppen davon einzeln abtastet.

6. Vorrichtung nach Anspruch 5, bei welcher die Lichtquelle (11-13) einen rotierenden Polygonspiegel zum Abtasten der Einzelprojektionen oder Gruppen davon umfaßt.

7. Vorrichtung nach einem der vorhergehenden Ansprüche, bei welcher die Lichtquelle (11-13) eine Laserlichtquelle ist.

8. Vorrichtung nach einem der vorhergehenden Ansprüche, bei welcher die Einzelprojektionen in dem Medium in Form eines Volumenhologramms gespeichert sind und Lichtquelle (11-13), Medium (6; 14-16; 23) und Projektionswand (17; 20) so angeordnet sind, daß die volumenholografisch gespeicherten Einzelprojektionen in Transmission ausgelesen werden.

9. Vorrichtung nach einem der vorhergehenden Ansprüche, bei welcher drei Medien (6; 14-16) mit den holographisch gespeicherten Einzelprojektionen für jeweils eine vorbestimmte Wellenlänge und drei jeweils den drei Medien zugeordnete Lichtquellen (11-13) mit jeweils einer vorbestimmten Lichtwellenlänge vorgesehen sind, die so zueinander angeordnet sind, daß ihre von dem jeweiligen Medium (6; 14-16) gebeugten Lichtstrahlen übereinander auf die Projektionswand (17) projiziert werden.

10. Vorrichtung nach einem der Ansprüche 1 bis 7, bei welcher die Einzelprojektionen in dem Medium (6; 14-16; 23) in Form eines Reflexionshologramms gespeichert sind und Lichtquelle (11-13), Medium (6; 14-16; 23) und Projektionswand (17; 20) so angeordnet sind, daß die holografisch gespeicherten Einzelprojektionen in Reflexion ausgelesen werden.

11. Vorrichtung nach Anspruch 10, bei welcher die Einzelprojektionen mit drei vorbestimmten Wellenlängen aufgezeichnet sind, und die Lichtquelle (11-13) entweder Weißlicht oder Licht in den drei vorbestimmten Lichtwellenlängen emittiert.

12. Vorrichtung nach einem der vorhergehenden Ansprüche, bei welcher die Projektionswand (17; 20) zum Erzielen ihrer richtungsabhängigen Streueigenschaft eine Lentikular-Linsenanordnung umfaßt.

13. Vorrichtung nach einem der Ansprüche 1 bis 11, bei welcher die Projektionswand (17; 20) zum Erzielen ihrer richtungsabhängigen Streueigenschaft ein entsprechend ausgebildetes holografisches Gitter umfaßt.

14. Vorrichtung nach einem der Ansprüche 1 bis 11, bei welcher die Projektionswand (17; 20) zum Erzielen ihrer richtungsabhängigen Streueigenschaft als Fresnelobjekt ausgebildet ist.

15. Vorrichtung nach einem der vorhergehenden Ansprüche, bei welcher die Projektionswand (20) eine Zylinderform hat und Lichtquelle sowie Medium (23) so ausgestaltet und zueinander angeordnet sind, daß der gebeugte Lichtstrahl im wesentlichen auf die gesamte Zylinderoberfläche der Projektionswand (20) projiziert wird.

16. Vorrichtung nach Anspruch 15, bei welcher die Lichtquelle einen Kegelspiegel (21) oder einen Drehspiegel umfaßt, der im wesentlichen auf der Achse der zylinderförmigen Projektionswand (20) so angeordnet ist, daß der von dem Kegel- (21) bzw. Drehspiegel reflektierte Lichtstrahl auf die Projektionswand (20) projiziert wird.

17. Vorrichtung nach Anspruch 16, bei welcher das Medium (23) ringförmig ausgestaltet ist und so bezüglich des Kegel- (21) bzw. Drehspiegels angeordnet ist, daß der von dem Kegel- (21) bzw. Drehspiegel reflektierte Lichtstrahl zum Auslesen der Einzelprojektionen auf das Medium (23) geführt wird.

18. Vorrichtung nach Anspruch 16 oder 17, bei welcher ein Ringspiegel (22) vorgesehen und so angeordnet ist, daß der von dem Kegel- (21) bzw. Drehspiegel reflektierte Lichtstrahl von dem Ringspiegel (22) von außen auf die Zylinderoberfläche der Projektionswand (20) reflektiert wird.

19. Vorrichtung nach einem der vorhergehenden Ansprüche, bei welcher die Projektionswand (17; 23) in einen Tisch integriert ist, wobei die lichtführenden Bauteile (11-13, 6; 14-16; 21-23) unterhalb der Tischebene angeordnet sind.

20. Vorrichtung nach einem der vorhergehenden Ansprüche, bei welcher ein Magazin mit mehreren Medien vorgesehen ist, das ein automatisches Wechseln der Medien gestattet.

21. Vorrichtung nach einem der vorhergehenden Ansprüche, welche nach Art eine Dia-Projektors mit Überblendfunktion ausgestaltet ist.

22. Verfahren zum Projizieren von holografisch gespeicherten Einzelprojektionen auf eine Projektionswand (17; 20), bei welchem:
a) ein Lichtstrahl auf ein Medium (6; 14-16; 23) mit in einer ersten Richtung nebeneinander holografisch gespeicherten Einzelprojektionen geführt wird; und
b) der holographisch gebeugte Lichtstrahl auf die Projektionswand (17; 20) projiziert wird
**dadurch gekennzeichnet, daß**
c) die Projektionswand (17; 20) den projizierten Lichtstrahl in der ersten Richtung erhält und in einer zweiten quer zur ersten Richtung verlaufenden Richtung streut.

23. Verfahren nach Anspruch 22, bei welchem der gebeugte Lichtstrahl so auf die Projektionswand (17; 20) geführt wird, daß bezüglich eines die Projektionswand (17; 20) betrachtenden Betrachters die erste Richtung horizontal und die zweite Richtung vertikal verläuft.

24. Verfahren nach Anspruch 22 oder 23, bei welchem der gebeugte Lichtstrahl auf die der Betrachtungsseite der Projektionswand (17; 20) gegenüberliegende Seite der Projektionswand (17; 20) projiziert wird.

25. Verfahren nach einem der Ansprüche 22 bis 24, bei welchem der Lichtstrahl gleichzeitig auf alle Einzelprojektionen des Mediums (6; 14-16; 23) geführt wird.

26. Verfahren nach einem der Ansprüche 22 bis 24, bei welchem der Lichtstrahl einzeln nacheinander auf die holografisch gespeicherten Einzelprojektionen des Mediums (6; 14-16; 23) oder Gruppen davon geführt wird.

27. Verfahren nach einem der Ansprüche 22 bis 26, bei welchem die holografisch gespeicherten Einzelprojektionen in Transmission ausgelesen werden.

28. Verfahren nach einem der vorhergehenden Ansprüche, bei welchem drei Lichtstrahlen mit jeweils einer vorbestimmten Lichtwellenlänge auf jeweils drei Medien (14-16) geführt werden, in denen die Einzelprojektionen jeweils gemäß einer der vorbestimmten Wellenlängen holografisch gespeichert sind, und die von dem jeweiligen Medium (14-16) gebeugten Lichtstrahlen übereinander auf die Projektionswand (17; 23) projiziert werden.

29. Verfahren nach einem der Ansprüche 22 bis 26, bei welchem die holografisch gespeicherten Einzelprojektionen in Reflexion ausgelesen werden.

30. Verfahren nach Anspruch 29, bei welchem das Medium (6; 14-16; 23), in dem die Einzelprojektionen in Form eines mit drei vorbestimmten Wellenlängen aufgezeichneten Reflexionshologramms gespeichert sind, mit Weißlicht oder Licht der drei vorbestimmten Lichtwellenlängen ausgelesen wird.

31. Verfahren nach einem der Ansprüche 22 bis 30, bei welchem mehrere Medien (6; 14-16; 23) automatisch gewechselt werden.

## Claims

1. A device for projecting holographically stored individual projections onto a projection screen (17; 20), comprising:
a) a light source (11-13) for producing a light beam;
b) a medium (6; 14-16; 23) having individual projections that are holographically stored next to each other in a first direction; and
c) a projection screen (17; 20);
d) wherein the light source (11-13), the medium (6; 14-16; 23) and the projection screen (17; 20) are disposed in relation to each other so that the light beam of the light source (11-13) falls onto the medium (6; 14-16; 23) and the light beam that is holographically diffracted there is projected onto the projection screen (17; 20);
**characterised in that**
e) the projection screen (17; 20) is configured in such a manner that it receives the light beam projected onto the projection screen (17; 20) in the first direction and scatters it in a second direction extending transversely to the first direction.

2. A device according to Claim 1, in which the projection screen (17; 20) is aligned with respect to an observer so that the first direction extends horizontally and the second direction extends vertically.

3. A device according to Claim 1 or 2, in which the projection screen (17; 20) is configured so that the side of view lies opposite the light beam projected onto the projection screen (17; 20), the projection screen (17; 20) being transparent in the first direction.

4. A device according to one of the preceding Claims, in which the light source (11-13) is configured so that its light beam simultaneously strikes all individual projections of the medium (6; 14-16; 23).

5. A device according to one of Claims 1 to 3, in which the light source (11-13) is configured so that its light beam individually scans the holographically stored individual projections of the medium (6; 14-16; 23) or groups thereof.

6. A device according to Claim 5, in which the light source (11-13) comprises a rotating polygon mirror for scanning the individual projections or groups thereof.

7. A device according to one of the preceding Claims, in which the light source (11-13) is a laser light source.

8. A device according to one of the preceding Claims, in which the individual projections are stored in the medium in the form of a volume hologram and the light source (11-13), the medium (6; 14-16; 23) and the projection screen (17; 20) are disposed so that the volume-holographically stored individual projections are selected in transmission.

9. A device according to one of the preceding Claims, in which three media (6; 14-16) with the holographically stored individual projections for in each case a predetermined wavelength and three light sources (11-13) in each case associated to the three media are each provided with a predetermined light wavelength, which are disposed in relation to each other so that their light beams diffracted by the respective medium (6; 14-16) are projected one above the other onto the projection screen (17).

10. A device according to one of Claims 1 to 7, in which the individual projections are stored in the medium (6; 14-16; 23) in the form of a reflection hologram and the light source (11-13), the medium (6; 14-16; 23) and the projection screen (17; 20) are disposed so that the holographically stored individual projections are selected in reflection.

11. A device according to Claim 10, in which the individual projections are recorded with three predetermined wavelengths, and the light source (11-13) emits either white light or light in the three predetermined light wavelengths.

12. A device according to one of the preceding Claims, in which the projection screen (17; 20) comprises a lenticular lens configuration for achieving its direction-dependent diffusing property.

13. A device according to one of Claims 1 to 11, in which the projection screen (17; 20) comprises a correspondingly designed holographic grating to achieve its direction-dependent diffusing property.

14. A device according to one of Claims 1 to 11, in which the projection screen (17; 20) is constructed to achieve its direction-dependent diffusing property as a Fresnel object.

15. A device according to one of the preceding Claims, in which the projection screen (20) has a cylindrical shape and the light source and also the medium (23) are configured and disposed in relation to one another so that the diffracted light beam is substantially projected onto the entire cylindrical surface of the projection screen (20).

16. A device according to Claim 15, in which the light source comprises a conic mirror (21) or a rotating mirror which is disposed substantially on the axis of the cylindrical projection screen (20) so that the light beam reflected by the conic mirror (21) or rotating mirror is projected onto the projection screen (20).

17. A device according to Claim 16, in which the medium (23) has an annular configuration and is disposed in relation to the conic mirror (21) or rotating mirror so that the light beam reflected by the conic mirror (21) or rotating mirror is conveyed to the medium (23) to select the individual projections.

18. A device according to Claim 16 or 17, in which a ring mirror (22) is provided and disposed so that the light beam reflected by the conic mirror (21) or rotating mirror is reflected by the ring mirror (22) from outside onto the cylindrical surface of the projection screen (20).

19. A device according to one of the preceding Claims, in which the projection screen (17; 23) is integrated into a table, with the light-conducting components (11-13; 6; 14-16; 21-23) being disposed beneath the plane of the table.

20. A device according to one of the preceding Claims, in which a magazine is provided with several media, which allows the media to be automatically changed.

21. A device according to one of the preceding Claims, which is configured in the manner of a slide projector with cross-fading function.

22. A method for projecting holographically stored individual projections onto a projection screen (17; 20), in which:
a) a light beam is conveyed onto a medium (6; 14-16; 23) having individual projections that are holographically stored next to each other in a first direction; and
b) the holographically diffracted light beam is projected to the projection screen (17; 20),
**characterised in that**
c) the projection screen (17; 20) receives the projected light beam in the first direction and diffuses it in a second direction extending transversely to the first direction.

23. A method according to Claim 22, in which the diffracted light beam is guided onto the projection screen (17; 20) so that the first direction extends horizontally and the second direction extends vertically in relation to an viewer observing the projection screen (17; 20).

24. A method according to Claim 22 or 23, in which the diffracted light beam is projected onto the side of the projection screen (17; 20) opposite the viewing side of the projection screen (17; 20).

25. A method according to one of Claims 22 to 24, in which the light beam is simultaneously guided to all individual projections of the medium (6; 14-16; 23).

26. A method according to one of Claims 22 to 24, in which the light beams are guided individually in succession to the holographically stored single projections of the medium (6; 14-16; 23) or groups thereof.

27. A method according to one of Claims 22 to 26, in which the holographically stored individual projections are selected in transmission.

28. A method according to one of the preceding Claims, in which three light beams each having a predetermined light wavelength are guided in each case onto three media (14-16), in which the individual projections in each case are holographically stored in accordance with one of the predetermined wavelengths, and the light beams diffracted by the respective medium (14-16) are projected one above the other onto the projection screen (17; 23).

29. A method according to one of Claims 22 to 26, in which the holographically stored individual projections are selected in reflection.

30. A method according to Claim 29, in which the medium (6; 14-16; 23) in which the individual projections are stored in the form of a reflection hologram recorded with three predetermined wavelengths is selected with white light or light of the three predetermined light wavelengths.

31. A method according to one of Claims 22 to 30, in which several media (6; 14-16; 23) are automatically changed.

## Revendications

1. Dispositif destiné à projeter des projections individuelles enregistrées holographiquement sur un écran (17 ; 20), comprenant :
a) une source de lumière (11 à 13) destinée à générer un faisceau lumineux ;
b) un support (6 ; 14 à 16 ; 23) doté de projections individuelles enregistrées holographiquement les unes à côté des autres dans une première direction ; et
c) un écran (17 ; 20) ;
d) la source de lumière (11 à 13), le support (6 ; 14 à 16 ; 23) et l'écran (17 ; 20) étant disposés les uns par rapport aux autres de sorte que le faisceau lumineux de la source de lumière (11 à 13) est incident sur le support (6 ; 14 à 16 ; 23) et que le faisceau lumineux diffracté holographiquement à cet endroit est projeté sur l'écran (17 ; 20) ;
**caractérisé en ce que**
e) l'écran (17 ; 20) est conçu de telle sorte qu'il reçoit le faisceau lumineux projeté sur l'écran (17 ; 20) dans la première direction et le disperse dans une seconde direction s'étendant transversalement à la première direction.

2. Dispositif selon la revendication 1, dans lequel l'écran (17 ; 20) est orienté par rapport à un observateur de sorte que la première direction s'étend horizontalement et la seconde direction verticalement.

3. Dispositif selon la revendication 1 ou 2, dans lequel l'écran (17 ; 20) est conçu de sorte que le côté d'observation est opposé au faisceau lumineux projeté sur l'écran (17 ; 20), l'écran (17 ; 20) étant transparent dans la première direction.

4. Dispositif selon l'une quelconque des revendications précédentes, dans lequel la source de lumière (11 à 13) est conçue de sorte que son faisceau lumineux heurte simultanément toutes les projections individuelles du support (6 ; 14 à 16 ; 23).

5. Dispositif selon l'une quelconque des revendications 1 à 3, dans lequel la source de lumière (11 à 13) est conçue de sorte que son faisceau lumineux balaye individuellement les projections individuelles enregistrées holographiquement du support (6 ; 14 à 16 ; 23) ou des groupes de celles-ci.

6. Dispositif selon la revendication 5, dans lequel la source de lumière (11 à 13) comporte un miroir polygonal rotatif destiné à balayer les projections individuelles ou des groupes de celles-ci.

7. Dispositif selon l'une quelconque des revendications précédentes, dans lequel la source de lumière (11 à 13) est une source de lumière laser.

8. Dispositif selon l'une quelconque des revendications précédentes, dans lequel les projections individuelles sont enregistrées dans le support sous forme d'un hologramme de volume et la source de lumière (11 à 13), le support (6 ; 14 à 16 ; 23) et l'écran (17 ; 20) sont disposés de sorte que les projections individuelles enregistrées sous forme d'hologramme de volume sont lues au cours de la transmission.

9. Dispositif selon l'une quelconque des revendications précédentes, dans lequel sont prévus trois supports (6 ; 14 à 16) dotés des projections individuelles enregistrées holographiquement pour respectivement une longueur d'onde prédéfinie et trois sources de lumière (11 à 13) associées respectivement aux trois supports dotées respectivement d'une longueur d'onde lumineuse prédéfinie, qui sont disposés les uns par rapport aux autres de sorte que leurs faisceaux lumineux diffractés par le support (6 ; 14 à 16) respectif sont projetés les uns au-dessus des autres sur l'écran (17).

10. Dispositif selon l'une quelconque des revendications 1 à 7, dans lequel les projections individuelles sont enregistrées dans le support (6 ; 14 à 16 ; 23) sous forme d'un hologramme de réflexion et la source de lumière (11 à 13), le support (6 ; 14 à 16 ; 23) et l'écran (17) sont disposés de sorte que les projections individuelles enregistrées holographiquement sont lues au cours de la réflexion.

11. Dispositif selon la revendication 10, dans lequel les projections individuelles sont tracées avec trois longueurs d'onde prédéfinies, et la source de lumière (11 à 13) émet soit une lumière blanche soit une lumière dans les trois longueurs d'onde lumineuse prédéfinies.

12. Dispositif selon l'une quelconque des revendications précédentes, dans lequel l'écran (17 ; 20), pour obtenir sa caractéristique de dispersion directionnelle, comporte un système de lentille lenticulaire.

13. Dispositif selon l'une quelconque des revendications 1 à 11, dans lequel l'écran (17 ; 20), pour obtenir sa caractéristique de dispersion directionnelle, comporte un réseau holographique.

14. Dispositif selon l'une quelconque des revendications 1 à 11, dans lequel l'écran (17 ; 20), pour obtenir sa caractéristique de dispersion directionnelle, est conçu comme un objectif de Fresnel.

15. Dispositif selon l'une quelconque des revendications précédentes, dans lequel l'écran (20) présente une forme cylindrique et la source de lumière ainsi que le support (23) sont conçus et disposés l'un par rapport à l'autre de sorte que le faisceau lumineux diffracté est projeté sensiblement sur l'ensemble de la surface cylindrique de l'écran (20).

16. Dispositif selon la revendication 15, dans lequel la source de lumière comporte un miroir conique (21) ou un miroir tournant, qui est disposé sensiblement sur l'axe de l'écran (20) cylindrique, de sorte que le faisceau lumineux réfléchi par le miroir conique (21) et ou tournant est projeté sur l'écran (20).

17. Dispositif selon la revendication 16, dans lequel le support (23) est conçu de façon annulaire et est disposé par rapport au miroir conique (21) et/ou tournant de sorte que le faisceau lumineux réfléchi par le miroir conique (21) et/ou tournant est guidé sur le support (23) pour lire les projections individuelles.

18. Dispositif selon la revendication 16 ou 17, dans lequel un miroir annulaire (22) est prévu est disposé de sorte que le faisceau lumineux réfléchi par le miroir conique (21) et/ou tournant est réfléchi par le miroir annulaire (22) depuis l'extérieur sur la surface cylindrique de l'écran (20).

19. Dispositif selon l'une quelconque des revendications précédentes, dans lequel l'écran (17 ; 23) est intégré dans un plateau, les composants conduisant les rayons lumineux (11 à 13, 6 ; 14 à 16 ; 21 à 23) étant disposés au-dessous du plan du plateau.

20. Dispositif selon l'une quelconque des revendications précédentes, dans lequel il est prévu un chargeur doté de plusieurs supports, qui permet de remplacer automatiquement les supports.

21. Dispositif selon l'une quelconque des revendications précédentes, lequel est conçu à la façon d'un projecteur de diapositives doté des fonctions de fondu.

22. Procédé destiné à projeter des projections individuelles enregistrées holographiquement sur un écran (17 ; 20), dans lequel :
a) un faisceau lumineux est guidé sur un support (6 ; 14 à 16 ; 23) doté de projections individuelles enregistrées holographiquement les unes à côté des autres dans une première direction ; et
b) le faisceau lumineux diffracté holographiquement est projeté sur l'écran (17 ; 20)
**caractérisé en ce que**
c) l'écran (17 ; 20) reçoit le faisceau lumineux projeté dans la première direction et le disperse dans une seconde direction s'étendant transversalement à la première direction.

23. Procédé selon la revendication 22, dans lequel le faisceau lumineux diffracté est guidé sur l'écran (17 ; 20), de sorte que par rapport à un observateur observant l'écran (17 ; 20), la première direction s'étend horizontalement et la seconde direction s'étend verticalement.

24. Procédé selon la revendication 22 ou 23, dans lequel le faisceau lumineux diffracté est projeté sur le côté de l'écran (17 ; 20) opposé au côté d'observation de l'écran (17 ; 20).

25. Procédé selon l'une quelconque des revendications 22 à 24, dans lequel le faisceau lumineux est guidé simultanément sur toutes les projections individuelles du support (6 ; 14 à 16 ; 23).

26. Procédé selon l'une quelconque des revendications 22 à 24, dans lequel le faisceau lumineux est guidé individuellement successivement sur les projections individuelles enregistrées holographiquement du support (6 ; 14 à 16 ; 23) ou des groupes de celles-ci.

27. Procédé selon l'une quelconque des revendications 22 à 26, dans lequel les projections individuelles enregistrées holographiquement sont lues au cours de la transmission.

28. Procédé selon l'une quelconque des revendications précédentes, dans lequel trois sources de lumière dotées respectivement d'une longueur d'onde lumineuse prédéfinie sont guidées sur respectivement trois supports (14 à 16), dans lesquels les projections individuelles sont respectivement enregistrées holographiquement selon une des longueurs d'onde prédéfinies, et les faisceaux lumineux diffractés par le support (14 à 16) respectif sont projetés les uns sur les autres sur l'écran (17 ; 23).

29. Procédé selon l'une quelconque des revendications 22 à 26, dans lequel les projections individuelles enregistrées holographiquement sont lues au cours de la réflexion.

30. Procédé selon la revendication 29, dans lequel le support (6 ; 14 à. 16 ; 23), dans lequel les projections individuelles sont enregistrées sous forme d'un hologramme de réflexion tracé avec trois longueurs d'onde prédéfinies, est lu avec une lumière blanche ou une lumière des trois longueurs d'onde prédéfinies.

31. Procédé selon l'une quelconque des revendications 22 à 30, dans lequel plusieurs supports (6 ; 14 à 16 ; 23) sont remplacés automatiquement.
